# EUROPÄISCHE PATENTSCHRIFT

(11) **EP 3 359 377 B1**
(45) Veröffentlichungstag und Bekanntmachung des Hinweises auf die Patenterteilung: **20.01.2021**
(21) Anmeldenummer: 16781061.3
(22) Anmeldetag: 21.09.2016
(51) Int. Cl.: B32B 37/20, B32B 15/08, B32B 39/00

(54) **VERFAHREN UND ANLAGE ZUM KONTINUIERLICHEN HERSTELLEN VON VERBUNDBÄNDERN ODER -BLECHEN**
METHOD AND SYSTEM FOR CONTINUOUSLY PRODUCING COMPOSITE STRIPS OR COMPOSITE SHEETS
PROCÉDÉ ET INSTALLATION DE FABRICATION EN CONTINU DE FEUILLARDS OU DE TÔLES COMPOSITES

(30) Priorität: 08.10.2015 DE 102015117201
(43) Veröffentlichungstag der Anmeldung: 15.08.2018
(73) Patentinhaber: ThyssenKrupp Steel Europe AG, 47166 Duisburg (DE)
(72) Erfinder: NOÉ, Andreas, 47647 Kerken (DE); SCHNEIDER, Josef, 57482 Wenden (DE); STASKE, Matthias, 47627 Kevelaer (DE); HEERMANN, Klemens, 46284 Dorsten (DE); KLARE, Andreas, 44532 Lünen (DE); KOCH, Klaus-Peter, 58332 Schwelm (DE); RASPUDIC, Gerold, 57223 Kreuztal (DE); RUDACK, Markus, 52076 Aachen (DE); JANSSEN, Stella, 40476 Düsseldorf (DE)
(74) Vertreter: ThyssenKrupp Steel Europe AG
(86) Internationale Anmeldenummer: PCT/EP2016/072450
(87) Internationale Veröffentlichungsnummer: WO 2017/060091

(56) Entgegenhaltungen:
- EP-A2- 0 087 546
- DE-A1-102009 013 712
- DE-A1-102012 103 472
- DE-A1-102013 110 282
- US-A- 3 725 169
- Anonymous: "Coil Coating Process - Coil Lines - How To Paint Metal Coils - Steel - Aluminum", , 15 December 2012 (2012-12-15), XP055581213, Retrieved from the Internet: URL:https://web.archive.org/web/2012121503 5638/https://www.coilcoating.org/how-to-pa int-metal-coils [retrieved on 2019-04-15]

## Beschreibung

Die Erfindung betrifft ein Verfahren zum Herstellen von Verbundbändern oder -blechen, bestehend aus zumindest einer ersten (z. B. unteren) Deckschicht aus Metall, einer zweiten (z. B. oberen) Deckschicht aus Metall und zumindest einer zwischen den Deckschichten angeordneten und mit diesen stoffschlüssig verbundenen Kernschicht aus Kunststoff, wobei ein erstes Metallband für die erste Deckschicht, ein zweites Metallband für die zweite Deckschicht und zumindest eine Kunststoffbahn, (z. B. Kunststofffolie) für die Kernschicht zusammengeführt und unter Anwendung von Druck und/oder Wärme kontinuierlich miteinander stoffschlüssig verbunden werden.

Solche Metall-Kunststoff-Verbundbleche bzw. Sandwichbleche werden z. B. im Fahrzeugbau eingesetzt. Sie sollen zum einen herkömmliche Stahlbleche und zum anderen auch Aluminiumbleche ersetzen, da sie einerseits leichter als Stahlbleche, andererseits jedoch kostengünstiger als Aluminiumbleche sind. Die Deckbleche weisen dabei z. B. eine Dicke im Bereich von 0,1 mm bis 1 mm auf und die Kernschicht aus Kunststoff weist z. B. eine Dicke von 0,05 mm bis 3 mm auf. Solche Verbundbleche finden im Automobilbau vielfältigen Einsatz, z. B. als Karosseriebleche für die Außenhaut, aber auch als Struktur- und Verstärkungsteile. Die Sandwichbleche zeichnen sich durch eine hohe Biege-und Beulsteifigkeit aus und sie verfügen außerdem über gute Umformeigenschaften, so dass sie hervorragend zu entsprechenden Bauteilen verarbeitbar sind. Neben der Gewichts- und Kostenreduzierung lassen sich mit solchen Sandwichblechen auch die akustischen Eigenschaften und die Wärmedämmung verbessern.

Im Zuge der Herstellung werden für die Deckbleche zunächst z. B. kaltgewalzte Stahlbleche zur Verfügung gestellt, die in der Regel geglüht, dressiert und (elektrolytisch) verzinkt werden. Die auf diese Weise hergestellten Deckbleche werden dann als erste obere Deckschicht und als zweite untere Deckschicht unter Zwischenschaltung der Kunststoffbahn zusammengeführt und unter Druck und/oder Wärme miteinander verbunden, indem die Kunststoff-Kernschicht sowohl mit der oberen Deckschicht als auch mit der unteren Deckschicht stoffschlüssig verbunden wird.

Ein Verfahren zum Herstellen von Verbundbändern oder -blechen ist z. B. aus der DE 10 2013 110 282 A1 bekannt. Dabei sollen die beiden Deckbleche aus einem Metallblech gebildet sein, dessen Oberflächen zueinander unterschiedliche Rauheiten aufweisen. Die Kunststoffschicht soll aus Polyamid, Polyethylen oder einer Mischung aus Polyamid und Polyethylen hergestellt sein. Das dressierte Metallband wird vor dem einseitigen Aufbringen der Kunststoffschicht zunächst in einer oder mehreren Bearbeitungsstationen vorbehandelt. So wird das Band z. B. in einer Bearbeitungsstation alkalisch entfettet und/oder gereinigt. In einer nachfolgenden Bearbeitungsstation wird die Bandoberfläche in einem oder mehreren chemischen Vorbehandlungsbädern passiviert und somit für die Beschichtung vorbereitet. Außerdem kann eine Bearbeitungsstation zum einseitigen Auftragen eines Haftvermittlers oder Klebstoffs vorgesehen sein. Nach dieser Vorbehandlung wird auf die ggf. mit Haftvermittler oder Kleber versehene Seite des Bandes eine Kunststoffschicht aufgebracht. Sie kann z. B. in Form einer vorgefertigten Kunststofffolie auf das Band aufkaschiert werden, z. B. mit einer Laminiervorrichtung, die Presswalzen aufweist, wobei zumindest eine der Walzen der Laminiervorrichtung beheizt sein kann. Nach dem Aufbringen der Kunststoffschicht durchläuft das einseitig beschichtete Band eine Kühlungs- und/oder Trocknungseinrichtung. Im Anschluss daran wird das Band zu einem Coil aufgewickelt und zwischengelagert oder unmittelbar zu einer Vorrichtung zum Aufbringen eines Deckbleches oder eines ebenfalls einseitig mit einer Kunststoffschicht beschichteten Deckbleches weitertransportiert. In dieser nachgeschalteten Vorrichtung werden dann z. B. zwei bandförmige Halbzeuge zusammengeführt, die jeweils aus einem Deckblech und einer Kunststoffbeschichtung bestehen, wobei die beiden Halbzeuge von der jeweiligen Abwickelhaspel abgewickelt und einem Walzenpaar in der Weise zugeführt werden, dass die beiden Kunststoffschichten der Halbzeuge einander zugewandt sind und aneinander anliegen. Unmittelbar bevor die Halbzeuge in den von den Walzen definierten Walzenspalt eingeführt werden, werden die Kunststoffschichten beider Halbzeuge durch von der Kunststoffoberflächenseite her einwirkende Mittel aktiviert (vgl. DE 10 2013 110 282 A1).

Ein ähnliches Verfahren zur Herstellung von Verbundblechen wird in der DE 10 2013 013 495 A1 beschrieben. Dabei erfolgt die Aktivierung der Kunststoffschicht der Halbzeuge unmittelbar von der mit Kunststoff beschichteten Seite des Halbzeugs her.

In der DE 10 2011 015 071 A1 und der DE 10 2012 106 206 A1 werden entsprechende Sandwichbleche beschrieben, bei denen die Kunststoffschicht aus faserverstärktem Kunststoff besteht.

Alternativ beschreibt die EP 2 193 021 B1 ein Sandwichblech, bei dem die aus Kunststoff hergestellte Kernschicht als Schaumschicht ausgebildet ist, die ein Polyamid-Polyethylen-Blend aufweist.

Ein Verfahren zur Herstellung von Verbundblechen wird im Übrigen auch in der EP 2 896 502 A1 beschrieben. Auf die Metallbänder kann mittels Plasmabeschichtung eine Haftvermittlerschicht aufgetragen werden.

Die DE 10 2013 201 388 A1 befasst sich mit der Herstellung von Metall-Kunststoff-Hybridbauteilen umfassend Metall und Kunststoff, wobei die Metalloberfläche durch Aufbringen mindestens einer Konversionsschicht vorbehandelt wird. Anschließend wird mindestens eine Schicht einer Haftvermittler-Zusammensetzung aufgebracht und dann wird das Metall mit dem Kunststoff verbunden. Die Haftvermittlerzusammensetzung soll dabei zumindest einen Schmelzklebstoff auf Copolyamid-Basis enthalten.

Schließlich offenbart die DE 10 2009 013 712 A1 die Herstellung von Verbundelementen, z. B. Sandwich-Platten, die eine erste Deckschicht und eine zweite Deckschicht aufweisen, wobei zwischen den Deckschichten eine Schaumstoffschicht angeordnet ist. Die Grenzflächen zwischen Schaumstoffschicht und zumindest einer Deckschicht weist eine Haftvermittlerschicht auf. Zumindest das Aufbringen der Haftvermittlerschicht und das Aufbringen der Schaumstoffschicht können in diskontinuierlicher Fahrweise erfolgen. Ein weiteres Verfahren sowie eine weitere Anlage sind der US3725169 zu entnehmen.

Insgesamt besteht das Bedürfnis, Verbundbleche der eingangs beschriebenen Art in wirtschaftlicher Weise mit hoher Qualität herzustellen.

Der Erfindung liegt die Aufgabe zugrunde, ein gattungsgemäßes Verfahren zu schaffen, mit welchem sich Verbundbänder oder -bleche wirtschaftlich mit hoher Qualität herstellen lassen. Dazu soll auch eine Anlage geschaffen werden, die eine wirtschaftliche Herstellung der Verbundbänder mit hoher Qualität ermöglicht und insbesondere störungsfrei arbeitet und die Bandschrottlänge minimiert.

Zur Lösung dieser Aufgabe lehrt die Erfindung ein Verfahren mit den Merkmalen des Anspruchs 1 sowie eine Anlage mit den Merkmalen des Anspruchs 5.

Die Erfindung geht dabei von der Erkenntnis aus, dass sich Verbundbahnen oder -bleche in wirtschaftlicher Weise mit hoher Qualität in zwei voneinander getrennten Behandlungslinien herstellen lassen. In einem ersten Herstellungsprozess erfolgt die vollständige Vorbehandlung der zur Verfügung gestellten Metallbänder und insbesondere das Aufbringen des Haftvermittlers, der in einem späteren Verfahrensschritt einen einwandfreien Verbund der Metallbänder mit der zwischengeschalteten Kunststoffbahn ermöglicht. Außerdem lassen sich in dieser Vorbehandlungslinie weitere Vorbehandlungsschritte durchführen, auf die im Folgenden noch eingegangen wird. Auf das Aufbringen der Kunststoffbahn wird jedoch im Zuge dieser Vorbehandlung ausdrücklich verzichtet. Durch Vorbehandlung in der Vorbehandlungslinie werden folglich einwandfrei vorbereitete und mit Haftvermittler beschichtete Metallbänder zur Verfügung gestellt, die zu Coils aufgewickelt werden. Diese vorbehandelten, aufgewickelten Metallbänder können dann nach ggf. einer Zwischenlagerung zu der zweiten Linie, nämlich der Laminierlinie transportiert werden. In dieser Laminierlinie werden dann die jeweils vorbereiteten Metallbänder unter Zwischenschaltung der Kunststoffbahn unter Anwendung von Druck und Wärme in einem kontinuierlichen Betrieb miteinander verbunden und folglich zu einem Verbundblech verarbeitet. Die Kunststoffbahn wird folglich erst in der Laminierlinie zugeführt, in der das Verbundband bzw. das Verbundblech aus den beiden Metallbändern hergestellt wird.

Durch die erfindungsgemäße Ausgestaltung lassen sich insbesondere bei Produktumstellungen oder auch bei Störungen die Bandschrottlängen minimieren. Denn für das Herstellen der Verbundbahnen in der Laminierlinie werden die in der separaten Vorbehandlungslinie vorbereiteten Bänder zur Verfügung gestellt. Muss z. B. der Laminierprozess aufgrund einer Störung oder eines Produktionsfehlers angehalten werden, so hat dieses keinen Einfluss auf das sich bereits in der Laminierlinie befindende vorbehandelte Band, das folglich nicht als Schrott entsorgt werden muss, sondern nach dem Anfahren tatsächlich verarbeitet werden kann, da insbesondere die Bandbeschichtungsvorrichtungen, die bei variierenden Bandgeschwindigkeiten oder bei stehendem Band zur Schrottproduktion führen würden, nicht in die Laminierlinie, sondern in die separate Vorbehandlungslinie integriert sind.

Im Übrigen ist vorteilhaft, dass nach der Vorbehandlung eine vollständige Inspektion des vorbehandelten Bandes möglich ist, bevor das Band dann tatsächlich zu einem Verbundblech weiterverarbeitet wird. So lässt sich insbesondere prüfen, ob die Außenseite des Metallbandes Defekte hat. Defekte Bänder lassen sich daher schon aussortieren, bevor sie zu Verbundblechen verarbeitet werden. Da im Übrigen in dem späteren Produkt nur eines der beiden Deckbleche die Außenseite bzw. Außenhaut (z. B. eines Karosserieblechs) bildet, besteht die Möglichkeit, vorbehandelte Bänder mit kleineren Defekten für das "innere" Deckblech einzusetzen, so dass die Wirtschaftlichkeit des Prozesses weiter verbessert werden kann.

Besonders vorteilhaft ist bei der Trennung in zwei Linien, dass sowohl die Metallbänder für die obere Deckschicht als auch die Metallbänder für die untere Deckschicht in ein und derselben Vorbehandlungslinie (nacheinander) vorbehandelt werden können. Dieses ist insbesondere deshalb zweckmäßig, weil die Vorbehandlungslinie mit einer höheren Geschwindigkeit betrieben wird, als die Laminierlinie. Denn die Vorbehandlung, insbesondere das Aufbringen des Haftvermittlers lässt sich mit deutlich höherer Geschwindigkeit realisieren als das (spätere) Laminieren und folglich das Verbinden der Metallbänder mit der Kunststoffbahn. Dabei ist auch von Bedeutung, dass das Beschichten der Metallbänder mit dem Haftvermittler z. B. mit einer Bandbeschichtungsvorrichtung durchgeführt werden kann, die als Walzen- bzw. Rollenbeschichtungsvorrichtung ausgebildet ist und zumindest eine Auftragswalze und ggf. eine Stützwalze aufweist. Solche Walzen-Bandbeschichtungsvorrichtungen sind aus der Praxis bekannt, sie werden z. B. auch in der EP 1 808 237 A1 beschrieben. Die Beschichtung der Bänder mit Walzenbeschichtungsvorrichtungen ist mit hoher Qualität wirtschaftlich besonders dann durchführbar, wenn die kontinuierliche Beschichtung mit verhältnismäßig hohen Mindestgeschwindigkeiten durchgeführt wird. Erfindungsgemäß ist nun von Vorteil, dass die Beschichtung der Bänder mit dem Haftvermittler mit einer anderen (insbesondere höheren) Geschwindigkeit erfolgen kann, als die eigentliche Laminierung, da diese Prozesse in zwei verschiedenen Linien realisiert werden. Die Erfindung umfasst aber auch Ausführungsformen, bei denen andere Beschichtungsvorrichtungen eingesetzt werden, z. B.

Beschichtungsvorrichtungen, die im Spritzverfahren oder Tauchverfahren arbeiten. Rollenbeschichtungsvorrichtungen weisen jedoch in der Regel den Vorteil auf, dass sie auch bei variierenden Bandgeschwindigkeiten einwandfrei arbeiten, niedrige Toleranzen aufweisen und im Übrigen sehr umweltfreundlich arbeiten.

In besonders bevorzugter Weiterbildung wird die Vorbehandlungslinie mit zumindest der doppelten Geschwindigkeit der Laminierlinie betrieben. Dieses hat den Vorteil, dass in der Vorbehandlungslinie sowohl die Metallbänder für die ersten (z. B. oberen) Deckbleche als auch die Metallbänder für die zweiten (z. B. unteren) Deckbleche (nacheinander) vorbehandelt werden können und dennoch aufgrund der doppelten Bearbeitungsgeschwindigkeit stets Metallbänder sowohl für die oberen Deckbleche als auch für die unteren Deckbleche für die sich anschließende Laminierlinie zur Verfügung stehen. In bevorzugter Weiterbildung kann mit noch höheren Geschwindigkeiten in der Vorbehandlungslinie gearbeitet werden. Auf diese Weise besteht ggf. die Möglichkeit, mit einer Vorbehandlungslinie mehrere Laminierlinien zu versorgen. Dieses ist vor allem deshalb interessant, weil die Vorbehandlungslinie -wie beschrieben - mit deutlich höheren Geschwindigkeiten betrieben werden kann als die Laminierlinie. Insgesamt ist von Vorteil, dass in der Laminierlinie einerseits und der Vorbehandlungslinie andererseits mit sehr unterschiedlichen Prozessgeschwindigkeiten gearbeitet werden kann.

Die Tatsache, dass sich sowohl die oberen Deckbleche als auch die unteren Deckbleche in ein und derselben Vorbehandlungslinie vorbeschichten lassen, hat darüber hinaus den großen Vorteil, dass sich die Gesamtanlage insgesamt sehr wirtschaftlich realisieren lässt, denn es müssen nicht sowohl für die oberen Deckbleche als auch für die unteren Deckbleche sämtliche Anlagenteile für eine Vorbehandlung zur Verfügung gestellt werden. Im Gegensatz zu einer Anlage, bei welcher die Vorbehandlung und insbesondere die Vorbeschichtung mit Haftvermittler in die Laminierlinie integriert wäre und bei welcher dann entsprechende Vorbehandlungseinrichtungen sowohl für das obere Deckblech als auch für das untere Deckblech zur Verfügung gestellt werden müssten, lässt sich der Anlagenaufwand erheblich reduzieren. Außerdem ist vorteilhaft, dass für den Einsatz in der separaten Laminierlinie vorbehandelte, plane und geprüfte Bänder zur Verfügung stehen, so dass sich dann auch Probleme in der nachgeschalteten, separaten Laminierlinie reduzieren lassen.

Dabei liegt es im Rahmen der Erfindung, dass in der Vorbehandlungslinie weitere Vorbehandlungsschritte in diesen kontinuierlichen Vorbehandlungsprozess integriert werden, insbesondere um die Bänder für das Aufbringen des Haftvermittlers zu optimieren. So erfolgt insbesondere vor der Vorbeschichtung eine Vorreinigung (z. B. in einer Vorreinigungseinrichtung) und eine Nachreinigung (in einer Nachreinigungseinrichtung). Außerdem lassen sich die Bänder im Zuge der Vorbehandlung richten, z. B. streckbiegerichten und/oder zugrecken, um plane Bänder für die Vorbeschichtung und/oder die Laminierung zur Verfügung zu stellen.

Von besonderer Bedeutung ist die Vorbeschichtung mit einem Haftvermittler. Diese Vorbeschichtung kann im Sinne einer Phosphatierung oder auf andere Weise erfolgen. Damit wird gewährleistet, dass im Zuge des sich anschließenden Laminierprozesses ein einwandfreier Verbund zwischen den Metallbändern einerseits und der Kunststoffbahn andererseits zu einer insgesamt stoffschlüssigen Verbindung erzielt wird. So lässt sich z. B. im Rahmen einer Phosphatierung mit Hilfe z. B. einer wässrigen Phosphat-Lösung eine Schicht als Haftvermittlerschicht aus fest haftenden Metallphosphaten bilden. Alternativ kommen aber auch andere Haftvermittlerschichten in Betracht.

Die metallischen Deckbleche weisen bevorzugt eine Dicke von 0,1 mm bis 1 mm, vorzugsweise 0,2 mm bis 0,6 mm auf.

Die Zwischenschicht aus Kunststoff weist z. B. eine Dicke von 0,05 mm bis 3 mm, z. B. 0,3 mm bis 2 mm auf. Dicke der Zwischenschicht meint dabei die Dicke der Zwischenschicht im fertigen Produkt und folglich innerhalb des Verbundbleches.

Die Kunststoffbahn ist bevorzugt als Kunststofffolie ausgebildet. Die Kunststoffbahn kann z. B. aus thermoplastischem Kunststoff bestehen, z. B. aus Polyethylen, Polypropylen und/oder Polyamid. Kunststoff bzw. Kunststoffbahn meint dabei im Rahmen der Erfindung auch Kunststoffbahnen bzw. Kunststoffe, in welche weitere Partikel oder dergleichen, z. B. Fasern integriert sind und folglich insbesondere faserverstärkte Kunststoffe oder Kunststoffbahnen. Es werden folglich auch Bahnen erfasst, die Kunststoff als eine Komponente aufweisen oder auf Basis von Kunststoff hergestellt sind. Im Übrigen können zwischen den Deckschichten auch mehrere Kunststoffbahnen, z. B. zwei Kunststoffbahnen angeordnet sein.

Es werden bevorzugt thermoplastische Kunststoffe mit verhältnismäßig hohen Schmelzpunkten verwendet, um im Zuge der Anwendung und Weiterverarbeitung dann auch Verarbeitungsprozesse der Verbundbänder oder -bleche bei höheren Temperaturen, z. B. im Rahmen einer Lackierung, zu ermöglichen.

So lassen sich z. B. für die Kernschicht Kunststoffbahnen aus einem Polyethylen-Polyamid-Compoundkern mit einer Schmelztemperatur von mehr als 200 °C, z. B. 200 °C bis 250 °C, z. B. etwa 220 °C verwenden.

In der von der Vorbehandlungslinie getrennten Laminierlinie werden die Metallbänder unter Zwischenschaltung der Kunststoffbahn zusammengeführt und miteinander unter Anwendung von Druck und Wärme kontinuierlich zu einem Verbundblech verbunden. Sowohl die Vorbehandlungslinie einerseits als auch die Laminierlinie andererseits sind folglich bevorzugt als jeweils separat voneinander arbeitende kontinuierliche Linien ausgebildet, in denen eine kontinuierliche Behandlung der Metallbänder erfolgt.

Gegenstand der Erfindung ist auch eine Anlage zum Herstellen von Verbundbändern oder -blechen der beschriebenen Art. Eine solche Anlage weist einerseits eine Vorbehandlungslinie zum Beschichten des ersten Metallbandes und des zweiten Metallbandes und andererseits eine von der Vorbehandlungslinie getrennte Laminierlinie zum Verbinden der Metallbänder unter Zwischenschaltung der Kunststoffbahn auf.

Die Vorbehandlungslinie weist zumindest einen Abwickler (für das Abwickeln des zu behandelnden Metallbandes), eine Beschichtungsvorrichtung (zum Beschichten des Metallbandes mit einem Haftvermittler) und einen Aufwickler (zum Aufwickeln des beschichteten Metallbandes) auf. Die Beschichtungsvorrichtung ist dabei bevorzugt als Walzenbeschichtungsvorrichtung mit zumindest einer Auftragswalze sowie ggf. einer Stützwalze ausgebildet. Außerdem kann die Vorbehandlungslinie zumindest eine Reinigungsvorrichtung, z. B. eine Vorreinigungseinrichtung und eine Nachreinigungseinrichtung aufweisen, die der Beschichtungsvorrichtung vorgeschaltet ist/sind. Optional kann die Vorbehandlungslinie eine Richtvorrichtung, z. B. eine Streckbiegerichtvorrichtung aufweisen, die der Beschichtungsvorrichtung bevorzugt ebenfalls vorgeordnet ist. So liegt es z. B. im Rahmen der Erfindung, dass dem Abwickler eine erste Richtvorrichtung, dann eine Vorreinigungseinrichtung, dann eine zweite Richtvorrichtung und danach eine Nachreinigungsvorrichtung angeordnet sind. An die Nachreinigungseinrichtung kann sich dann - ggf. unter Zwischenschaltung eines Trockners - die Beschichtungsvorrichtung, z. B. als Rollencoater, anschließen. An die Beschichtungsvorrichtung kann sich eine Heizvorrichtung, z. B ein Ofen anschließen, den das vorbeschichtete Band durchläuft. An die Heizvorrichtung kann sich optional eine Kühlvorrichtung anschließen. Die Vorbehandlungslinie endet dann mit dem bereits beschriebenen Aufwickler. Darüber hinaus kann die Vorbehandlungslinie weitere übliche Anlagenkomponenten, insbesondere Spannrollensätze, Treiber, Bandspeicher usw. aufweisen.

Die Laminierlinie weist zumindest einen ersten Abwickler (zum Abwickeln des beschichteten ersten Metallbandes) einen zweiten Abwickler (zum Abwickeln des beschichteten zweiten Metallbandes) und einen dritten Abwickler für die Kunststoffbahn auf. Außerdem ist eine Zusammenführvorrichtung vorgesehen, in der die Metallbänder unter Zwischenschaltung der Kunststoffbahn zusammengeführt werden. Ferner ist eine der Zusammenführvorrichtung nachgeordnete Heiz- und/oder Pressvorrichtung vorgesehen, in der dann der stoffschlüssige Verbund zwischen den Metallbändern und der zwischengeschalteten Kunststoffbahn hergestellt bzw. abgeschlossen wird. Dabei liegt es grundsätzlich im Rahmen der Erfindung, die Kunststoffbahn unmittelbar im Zuge des Zusammenführens der Metallbänder zuzuführen, so dass die Kunststoffbahn ggf. in den zusammenlaufenden Spalt zwischen den beiden Metallbändern eingeführt wird. In einer bevorzugten Weiterbildung der Erfindung erfolgt das Zusammenführen der Metallbänder und der Kunststoffbahn jedoch in zumindest zwei Stufen. Dazu weist die Zusammenführvorrichtung bevorzugt eine erste Laminiereinheit auf, mit der die Kunststoffbahn mit dem ersten Metallband (z. B. dem unteren Metallband) zusammengeführt wird und eine zweite Laminiereinheit, mit der das zweite Metallband (z. B. das obere Metallband) mit der auf bzw. an dem ersten Metallband angeordneten Kunststoffbahn zusammengeführt wird. Es liegt folglich im Rahmen der Erfindung, dass erste Metallband (z. B. das untere Metallband) zuzuführen und die Kunststoffbahn mit dem ersten Metallband zusammenzuführen, so dass die Kunststoffbahn z. B. auf das erste Metallband aufkaschiert wird. Anschließend wird dann das zweite Metallband zugeführt, so dass in der zweiten Laminiereinheit dann ein zweiter Laminier- bzw. Kaschierprozess erfolgt.

Der auf diese Weise hergestellte Verbund wird dann in der Heiz- und/oder Pressvorrichtung fertiggestellt. Dazu kann die Heiz- und Pressvorrichtung z. B. einerseits eine Heizeinrichtung, z. B. einen Durchlaufofen und andererseits eine der Heizeinrichtung nachgeordnete, separate Presseinrichtung aufweisen, die z. B. von einer Walzenanordnung bzw. einem Kalander gebildet wird. An diese Presseinrichtung kann sich dann optional eine weitere Heizeinrichtung und/oder eine Kühleinrichtung anschließen.

In bevorzugter Weiterbildung erfolgt in der Zusammenführvorrichtung und folglich im Zuge des Kaschierens bzw. Laminierens eine geeignete Temperierung der Metallbänder und der Kunststoffbahn. Die Zusammenführvorrichtung weist daher bevorzugt eine Vorheizeinrichtung für das erste Metallband, eine Vorheizeinrichtung für das zweite Metallband, eine Vorheizeinrichtung für die Kunststoffbahn und/oder Nachheizeinrichtung für das erste Metallband und die darauf angeordnete Kunststoffbahn auf. Insofern bestehen im Rahmen der Erfindung vielfältige Möglichkeiten, die Temperierung der Bänder bzw. Bahnen an die gewünschte Gegebenheit und insbesondere auch an das Temperaturverhalten des verwendeten thermoplastischen Kunststoffes anzupassen und so die Verfahrensführung zu optimieren.

Optional kann es zweckmäßig sein, die Metallbänder in der Laminierlinie beim Anfahren des Prozesses im Bereich eines Bandanfangs mit einer (zusätzlichen) Bandverbindungsvorrichtung lokal miteinander zu verbinden. Eine solche Verbindung der beiden Metallbänder erfolgt im Anfahrprozess, besonders bevorzugt ohne zwischengeschaltete Kunststoffbahn. Die Verbindung kann z. B. durch Stanzen, Nieten, Durchsetzfügen (Clinchen) und/oder Schweißen oder auch Kleben erfolgen. Solche Bandverbindungsvorrichtungen sind aus Prozesslinien für die Herstellung von Metallbändern bekannt. Sie werden bei der beschriebenen Anlage optional im Bereich der Zusammenführvorrichtung oder in Bandlaufrichtung hinter der Zusammenführvorrichtung und vor der Heiz-und/oder Pressvorrichtung angeordnet. Durch diese zusätzliche, lokale Bandverbindung im Bereich des Bandanfangs bzw. im Bereich des Bandanfangs eines der Metallbänder wird eine Delamination dieses Bereichs im weiteren Durchlauf durch die Laminierlinie vermieden. Der Anfahrprozess lässt sich insgesamt optimieren und im Übrigen ist gewährleistet, dass beim Durchlaufen durch die Laminierlinie und insbesondere die entsprechenden Heiz- und ggf. Pressstrecken von Anfang an die beiden Oberflächen der durchlaufenden Anordnung von Metallbändern und nicht von dem Kunststoffband gebildet werden.

Optional besteht im Übrigen die Möglichkeit, in die Vorbehandlungslinie eine Dressiereinrichtung zum Dressierwalzen der Metallbänder zu integrieren, wobei eine solche Dressiereinrichtung bevorzugt vor einer Streckbiegerichteinrichtung, z. B. unmittelbar vor einer Streckbiegerichteinrichtung angeordnet ist.

Außerdem besteht optional die Möglichkeit, die Deckbleche einseitig mit einer Folie, z. B einer Schutzfolie, zu versehen, und zwar auf der dem Haftvermittler gegenüberliegenden Außenseite des jeweiligen Deckbleches. Eine solche Folie kann z. B. im Wege des Kaltkaschierens auf das Deckblech aufgebracht werden, und zwar in der Vorbehandlungslinie und/oder in der Laminierlinie.

Im Folgenden wird die Erfindung anhand einer lediglich ein Ausführungsbeispiel darstellenden Zeichnung näher erläutert. Es zeigen
- Fig. 1: ein Verbundband bzw. -blech in einem vereinfachten Querschnitt,
- Fig. 2: eine Anlage zum Herstellen eines Verbundbandes mit einer Vorbehandlungslinie einerseits und einer davon separaten Laminierlinie andererseits in einer stark vereinfachten, schematischen Darstellung,
- Fig. 3: die Vorbehandlungslinie der Anlage nach Fig. 1 in einer vereinfachten Darstellung,
- Fig. 4: die Laminierlinie der Anlage nach Fig. 1 in einer vereinfachten schematischen Darstellung.

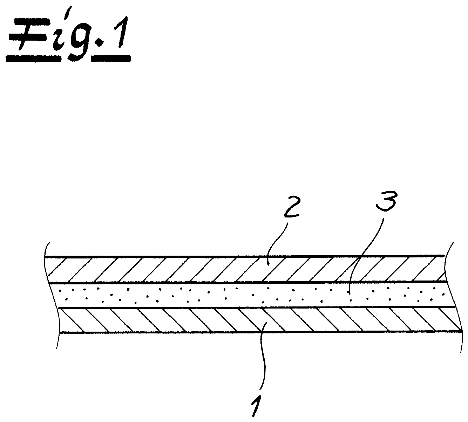

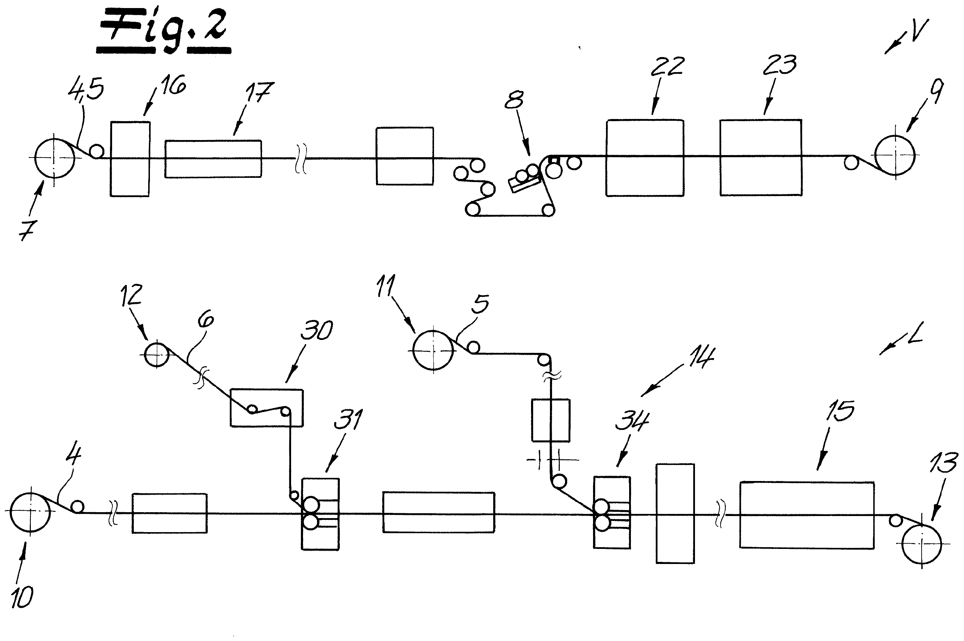

Mit der in den Fig. 2 bis 4 dargestellten Anlage lassen sich Verbundbänder bzw. -bleche herstellen, die aus zumindest einer unteren Deckschicht 1 aus Metall, einer oberen Deckschicht 2 aus Metall und einer zwischen den Deckschichten 1, 2 angeordneten Kernschicht 3 aus Kunststoff bestehen, wobei die Deckschichten 1, 2 stoffschlüssig mit der Kernschicht 3 aus Kunststoff verbunden sind (vgl. Fig. 1).

Zum Herstellen solcher Verbundbänder nach Fig. 1 werden in der Anlage nach Fig. 2 folglich ein erstes Metallband 4 für die untere Deckschicht und ein oberes Metallband 5 für die obere Deckschicht und eine Kunststoffbahn 6 für die Kernschicht zur Verfügung gestellt. Das erste Metallband 4 und das zweite Metallband 5 und die Kunststoffbahn 6 werden kontinuierlich zusammengeführt und unter Anwendung von Druck und/oder Wärme kontinuierlich miteinander stoffschlüssig verbunden. Für den erfindungsgemäßen Prozess zum Herstellen von Verbundbändern werden folglich Metallbänder 4, 5 als Ausgangsprodukt zur Verfügung gestellt. Dabei handelt es sich z. B. um Metallbänder aus Stahl, z. B. elektrolytisch verzinkte und ggf. geölte Stahlbänder. Alternativ können aber auch Bänder aus Aluminium oder anderen Metallen zum Einsatz kommen.

Erfindungsgemäß erfolgt die Herstellung der Verbundbänder aus solchen Stahlbändern 4, 5 in einer Anlage, die aus zwei separaten, jeweils kontinuierlich arbeitenden Linien besteht, nämlich einer Vorbehandlungslinie V einerseits und einer Laminierlinie L andererseits (vgl. Fig. 2).

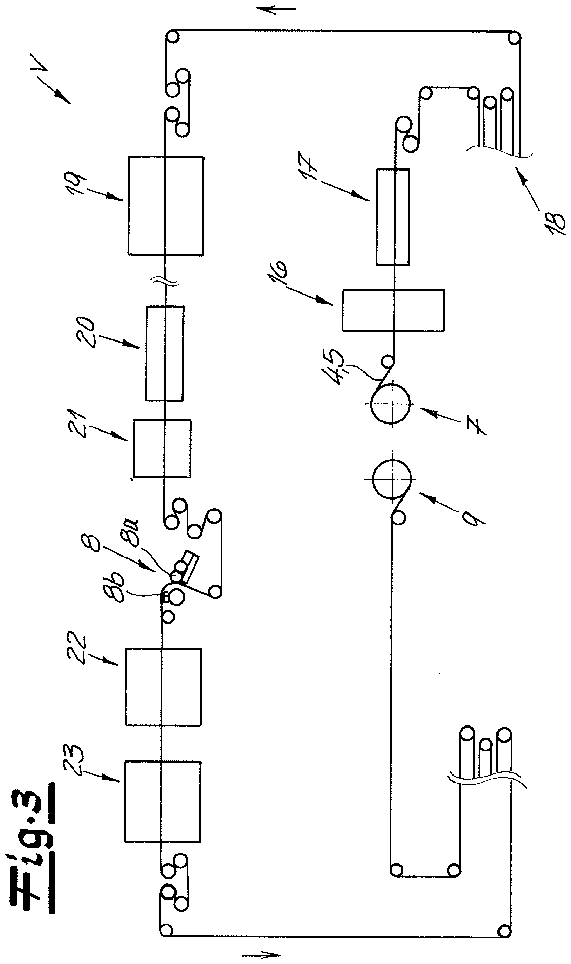

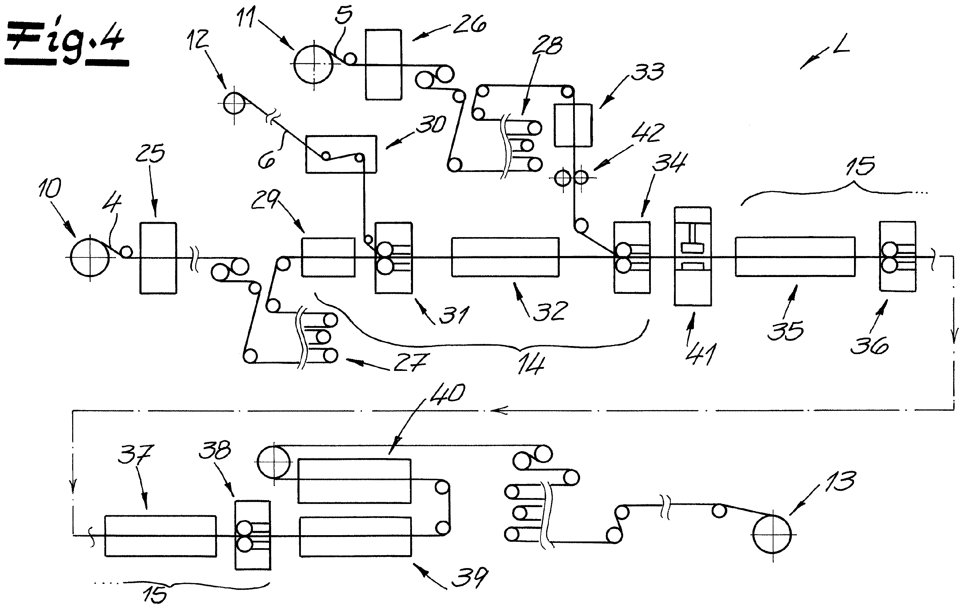

Sowohl das erste Metallband 4 als auch das zweite Metallband 5 werden in einer (einzigen) kontinuierlich arbeitenden Vorbehandlungslinie V jeweils kontinuierlich einseitig mit einem Haftvermittler beschichtet und anschließend aufgewickelt.
Anschließend werden das (vorbehandelte und vorbeschichtete) erste Metallband 4 und das (vorbehandelte und vorbeschichtete) zweite Metallband 5 und die Kunststoffbahn 6 in einer von der Vorbehandlungslinie V getrennten und wiederum kontinuierlich arbeitenden Laminierlinie L zusammengeführt und miteinander unter Anwendung von Druck und Wärme kontinuierlich zu einem Verbundblech verbunden. Die Vorbehandlungslinie V ist im Einzelnen in Fig. 3 dargestellt und die davon separate Laminierlinie L ist im Einzelnen in Fig. 4 dargestellt.

Die Vorbehandlungslinie V weist zumindest einen Abwickler 7 für das erste Metallband 4 und das zweite Metallband 5, zumindest eine Beschichtungsvorrichtung 8 zum Beschichten der Metallbänder 4, 5 mit einem Haftvermittler und eine Aufwickelvorrichtung 9 auf.

Auf diese Weise werden auf Coils aufgewickelte, vorbehandelte bzw. vorbeschichtete Metallbänder 4, 5 für den anschließenden Laminierprozess zur Verfügung gestellt.

Die Laminierlinie L weist wiederum einen ersten Abwickler 10 für das erste Metallband 4, einen zweiten Abwickler 11 für das zweite Metallband 5 und eine Abwickelvorrichtung 12 für die Kunststoffbahn 6 auf. Außerdem kann z. B. ein Aufwickler 13 für die fertige Verbundbahn vorgesehen sein. Ferner weist die Laminierlinie L eine Zusammenführvorrichtung 14 auf, in der die Metallbänder 4, 5 unter Zwischenschaltung der Kunststoffbahn 6 zusammengeführt werden. An die Zusammenführvorrichtung 14 schließt sich dann eine Heiz- und/oder Pressvorrichtung 15 an, in der der Verbund zwischen den Deckblechen 4, 5 und der zwischengeschalteten Kunststoffbahn 6 hergestellt bzw. fertiggestellt wird.

Von besonderer Bedeutung ist erfindungsgemäß die Tatsache, dass - so wie in Fig. 2 dargestellt - die Vorbehandlung einerseits und die Laminierung bzw. Kaschierung andererseits in separaten Linien realisiert werden, wobei diese separaten Linien dann wiederum jeweils kontinuierlich arbeiten. Dabei ist vorgesehen, dass der Laminierlinie L nur eine einzige Vorbehandlungslinie V zugeordnet ist, mit der sowohl die unteren Deckbleche 4 als auch die oberen Deckbleche 5 vorbehandelt werden. Dazu ist es vorteilhaft, wenn die Vorbehandlungslinie V mit einer deutlich größeren Geschwindigkeit arbeitet als die Laminierlinie L, bevorzugt mit (in etwa) der doppelten Geschwindigkeit, so dass die Vorbehandlungslinie mit der doppelten Geschwindigkeit an die Kapazität der Laminierlinie angepasst ist und folglich von der Vorbehandlungslinie V sowohl erste Metallbänder 4 als auch zweite Metallbänder 5 in ausreichendem Umfang zur Verfügung gestellt werden.

Aufbau und Funktionsweise der Vorbehandlungslinie V lassen sich anhand von Fig. 3 verdeutlichen:
Das jeweilige Metallband 4, 5 wird von dem Abwickler 7 abgewickelt und zunächst in einer ersten Richtvorrichtung 16 gerichtet. Dabei dient diese erste Richtvorrichtung 16, welche (unmittelbar) hinter dem Abwickler 7 angeordnet ist, einer Krümmungskorrektur, insbesondere um die durch das Wickeln der Bänder entstandenen Krümmungen zu eliminieren. Es können sich verschiedene Bearbeitungsmaschinen anschließen, die nicht im Einzelnen dargestellt sind (Scheren, Schrottentsorgung, Treiber, Heftmaschine, Seitenstanze usw.). Das jeweilige Metallband 4, 5 durchläuft dann eine erste Reinigungsvorrichtung bzw. Vorreinigungsvorrichtung 17 und ggf. einen Bandspeicher 18. An die erste Reinigungsvorrichtung 17 schließt sich eine zweite Richtvorrichtung 19 an, die z. B. als Streckbiegerichtvorrichtung zur Verbesserung der Bandplanheit ausgebildet sein kann. An diese zweite Richtvorrichtung 19 schließt sich eine zweite Reinigungsvorrichtung 20 bzw. Nachreinigungsvorrichtung an. Anschließend durchläuft das Band z. B. einen Trockner 21, der z. B. als Warmlufttrockner ausgebildet sein kann. Die bereits beschriebene Beschichtung mit einem Haftvermittler erfolgt anschließend mit der Bandbeschichtungsvorrichtung 8, die im Ausführungsbeispiel als Rollenbeschichtungsvorrichtung bzw. Walzenbeschichtungsvorrichtung ausgebildet ist und zumindest eine Auftragswalze 8a und eine Stützwalze 8b aufweist. An die Bandbeschichtungsvorrichtung 8 schließt sich eine Heizvorrichtung 22 (z. B. ein Ofen) und ggf. eine Kühlvorrichtung 23 (z. B. eine Luftkühlvorrichtung) an.

Das aus diese Weise vorbehandelte Metallband 4, 5 wird dann mit dem Aufwickler 9 aufgewickelt. Das vorbehandelte Metallband 4, 5 wird folglich als gereinigtes, gerichtetes und mit Haftvermittler vorbeschichtetes Band auf Coils zur Verfügung gestellt, die dann für die Herstellung der Verbundbänder in der Laminierlinie L zur Verfügung stehen.

Aufbau und Funktionsweise der Laminierlinie L lassen sich anhand von Fig. 4 verdeutlichen:
Die Laminierlinie L weist einen ersten Abwickler 10 für das erste Metallband 4 und einen zweiten Abwickler 11 für das zweite Metallband 5 auf. An die Abwickler 10, 11 können sich optional jeweils Richtmaschinen 25, 26 sowie ggf. Bandspeicher 27, 28 anschließen. Das erste Metallband 4 für das untere Deckblech wird in einer Vorheizeinrichtung 29, z. B. einem Ofen, vorgeheizt. Dieses vorgeheizte untere Metallband 4 wird anschließend mit der Kunststoffbahn 6 zusammengeführt. Dazu wird die Kunststoffbahn 6 von dem Abwickler 12 abgewickelt und in einer Vorheizeinrichtung 30 ebenfalls vorgeheizt und dann mit dem ersten Metallband 4 zusammengeführt, und zwar in einer ersten Laminiereinheit 31, die als Walzenanordnung bzw. Kalander ausgebildet sein kann. An diese erste Laminiereinheit 31 schließt sich eine Nachheizeinrichtung 32, z. B. ein Ofen, an, mit welcher das erste Metallband und die darauf angeordnete Kunststoffbahn 6 weiter temperiert werden.

Das zweite Metallband 5 wird ebenfalls in einer Vorheizeinrichtung 33 vorgeheizt und dann in einer zweiten Laminiereinheit 34 mit dem ersten Metallband 4 und der darauf angeordneten Kunststoffbahn 6 zusammengeführt. Diese zweite Laminiereinheit 34 kann wiederum als Walzenanordnung bzw. Kalander ausgebildet sein. An die zweite Laminiereinheit 34 schließt sich die Heiz- und Pressvorrichtung 15 an, die zumindest eine Heizeinrichtung 35, z. B. einen Ofen, und eine Presseinrichtung 36 sowie ggf. eine weitere Heizeinrichtung 37 und eine weitere Pressvorrichtung 38 aufweist. Außerdem sind dann bevorzugt ein oder mehrere Kühleinrichtungen 39, 40 vorgesehen, mit denen eine Kühlung des fertigen Verbundbandes erfolgt, bevor dieses anschließend mit der Aufwickelvorrichtung 13 aufgewickelt wird oder optional sogleich in einer entsprechenden Anlage zu Blechen aufgeteilt wird.

Im Übrigen ist in Fig. 4 angedeutet, dass die Laminierlinie mit einer Bandverbindungsvorrichtung 41 ausgerüstet ist, mit der die beiden Metallbänder 4, 5 im Zuge des Anfahrens der Laminierlinie L (zusätzlich) und unabhängig von der stoffschlüssigen Verbindung über die Kunststoffbahn lokal miteinander verbunden werden. Dazu ist die Bandverbindungsvorrichtung 41 z. B. als Stanzverbindung bzw. Heftverbindung oder als Durchsetzfügevorrichtung oder als Schweißvorrichtung oder dergleichen ausgebildet. Bevorzugt werden die beiden Metallbänder 4, 5 während des Anfahrprozesses lokal ohne zwischengeschaltete Kunststoffbahn 6 miteinander verbunden. Diese lokale Bandverbindung im Bereich eines Bandanfangs vermeidet eine Delamination im Bereich des Bandanfangs beim weiteren Durchlauf durch die folgenden Anlagenkomponenten, insbesondere die Heizvorrichtungen und Pressvorrichtungen.

Im Zuge des Anfahrens der Laminierlinie L wird bevorzugt zunächst das erste (untere) Metallband 4 vollständig in die Laminierlinie eingezogen und mit der Aufwickelvorrichtung 13 durch die Laminierlinie L durchgezogen. Der ersten Laminiereinheit 31 wird die Kunststoffbahn 6 auf das untere Metallband 4 aufkaschiert. Bevor das erste Metallband mit der darauf angeordneten Kunststoffbahn 6 dann die zweite Laminiereinheit 34 erreicht, wird das untere Metallband 4 angehalten. Nun wird das obere Metallband 5 über einen Treiber 42 zugeführt, so dass sich das obere Metallband 42 ohne zwischengeschaltete Kunststoffbahn auf das untere Metallband 4 legt. Das obere Metallband 5 wird bis in den Bereich der Bandverbindungsvorrichtung 41 geführt und dort lassen sich die Metallbänder 4, 5 dann miteinander verbinden, z. B. durch Heften, Clinchen, Schweißen, Kleben oder dergleichen. Die Bandverbindung erfolgt folglich im Bereich des Bandanfangs eines der Bänder, im Ausführungsbeispiel des oberen Bandes 5. Anschließend kann der Treiber 42 geöffnet werden und das untere Metallband 4 wird dann mit dem daran befestigten oberen Metallband 5 durch die Anlage gezogen, so dass auch die Kunststoffbahn 6 die zweite Laminiereinheit 34 erreicht und der kontinuierliche Herstellungsprozess beginnen kann.

Durch die in der beschriebenen Laminierlinie L vorgesehenen Heizvorrichtungen lässt sich der Herstellungsprozess variabel führen und insbesondere an die Eigenschaften der verwendeten Kunststoffbahn und insbesondere deren Schmelzpunkt anpassen. So wird bevorzugt eine Kunststoffbahn bzw. Kunststofffolie mit einem Schmelzpunkt von mehr als 200 °C, z. B. etwa 220 °C verwendet, die z. B. eine Rekristallisationstemperatur von ca. 190 °C bis 200 °C aufweisen kann.

Mit der Heizvorrichtung 29 wird das erste Metallband 4 auf eine Temperatur oberhalb des Schmelzpunktes der Kunststoffbahn, z. B. auf eine Temperatur von mehr als 200 °C, z. B. etwa 250 °C erhitzt. Die Kunststoffbahn 6 wird in der Heizvorrichtung 30 ebenfalls vorgewärmt, jedoch auf eine Temperatur deutlich unterhalb des Schmelzpunktes der Kunststoffbahn, z. B. auf eine Temperatur von 25 °C bis 100 °C. Anschließend wird der Verbund aus erstem Metallband 4 und Kunststoffbahn 6 in dem Ofen 32 gemeinsam erhitzt, und zwar auf eine Temperatur im Bereich des Schmelzpunktes der Kunststoffbahn, z. B. auf eine Temperatur zwischen 200 °C und 250 °C, z. B. etwa 220 °C bis 230 °C.

Das zweite Metallband 5 wird in der Heizvorrichtung 33 ebenfalls auf eine Temperatur oberhalb des Schmelzpunktes der Kunststoffbahn, z. B. auf eine Temperatur über 200 °C, z. B. etwa 250 °C erhitzt.

In der zweiten Laminiereinheit 34 weisen die Metallbänder 4, 5 und die Kunststoffbahn 6 folglich eine Temperatur im Bereich des Schmelzpunktes der Kunststoffbahn auf. Anschließend erfolgt eine weitere Erwärmung in der Heizvorrichtung 35, und zwar bevorzugt auf Temperaturen oberhalb des Schmelzpunktes, z. B. Temperaturen größer als 220 °C, z. B. etwa 250 °C. Mit dieser Temperatur werden die Bänder unter Zwischenschaltung der verflüssigten Kunststoffbahn in der Pressvorrichtung 36 miteinander verbunden. Anschließend erfolgt eine weitere Temperierung in der Heizeinrichtung 37 und ein weiteres Verbinden in der Pressvorrichtung 38 bei Temperaturen unterhalb des Schmelzpunktes der Kunststoffbahn. Anschließend erfolgt in den bereits erwähnten Kühlvorrichtungen schrittweise ein Abkühlen und Verfestigen.

Dabei ist die beschriebene Temperaturführung lediglich beispielhaft angegeben und sie richtet sich selbstverständlich nach den Eigenschaften der verwendeten Kunststoffbahn.

## Patentansprüche

1. Verfahren zum Herstellen von Verbundbahnen oder -blechen, bestehend aus zumindest einer ersten Deckschicht (1) aus Metall, einer zweiten Deckschicht (2) aus Metall und zumindest einer zwischen den Deckschichten (1, 2) angeordneten und mit diesen stoffschlüssig verbundenen Kernschicht (3) aus Kunststoff,
wobei ein erstes Metallband (4) für die erste Deckschicht (1), ein zweites Metallband (5) für die zweite Deckschicht (2) und zumindest eine Kunststoffbahn (6) für die Kernschicht (3) in einer Laminierlinie (2) zusammengeführt und unter Anwendung von Druck und/oder Wärme miteinander stoffschlüssig zu einer Verbundbahn verbunden werden,
**dadurch gekennzeichnet,**
**dass** das erste Metallband (4) und das zweite Metallband (5) in einer Vorbehandlungslinie (V) jeweils abgewickelt und kontinuierlich mit einem Haftvermittler beschichtet werden,
**dass** das erste Metallband (4) und das zweite Metallband (5) anschließend an das Beschichten aufgewickelt werden und
**dass** das erste Metallband (4) und das zweite Metallband (5) und die Kunststoffbahn (6) anschließend in der von der Vorbehandlungslinie (V) getrennten Laminierlinie (L) abgewickelt und zusammengeführt und miteinander unter Anwendung von Druck und Wärme kontinuierlich zu der Verbundbahn verbunden werden,
wobei die Vorbehandlungslinie (V) mit einer höheren Geschwindigkeit betrieben wird als die Laminierlinie (L), nämlich mit zumindest der doppelten Geschwindigkeit.

2. Verfahren nach Anspruch 1, **dadurch gekennzeichnet, dass** die Metallbänder (4, 5) in der Vorbehandlungslinie (V) jeweils gereinigt werden, z. B. in einer Vorreinigungseinrichtung und einer Nachreinigungseinrichtung.

3. Verfahren nach einem der Ansprüche 1 oder 2, **dadurch gekennzeichnet, dass** die Metallbänder (4, 5) in der Vorbehandlungslinie (V) jeweils gerichtet werden, z. B. im Wege des Streckbiegerichtens und/oder Zugreckens.

4. Verfahren nach einem der Ansprüche 1 bis 3, **dadurch gekennzeichnet, dass** die Metallbänder in der Vorbehandlungslinie (V) nach dem Beschichten mit Haftvermittler erwärmt bzw. getrocknet werden.

5. Anlage zum Herstellen von Verbundbändern oder -blechen, welche aus zumindest einer ersten Deckschicht (1) aus Metall, einer zweiten Deckschicht (2) aus Metall und zumindest einer zwischen den Deckschichten (1, 2) angeordneten und mit diesen stoffschlüssig verbundenen Kernschicht (3) aus Kunststoff bestehen, nach einem Verfahren nach einem der Ansprüche 1 bis 4,
**gekennzeichnet durch** zumindest eine Vorbehandlungslinie (V) zum Beschichten des ersten Metallbandes (4) und des zweiten Metallbandes (5) und zumindest eine von der Vorbehandlungslinie (V) getrennte Laminierlinie (L) zum Verbinden der Metallbänder unter Zwischenschaltung der Kunststoffbahn, wobei die Vorbehandlungslinie (V) zumindest einen Abwickler (7), eine Beschichtungsvorrichtung (8) und einen Aufwickler (9) aufweist und
wobei die Laminierlinie (L) zumindest einen ersten Abwickler (10) für das beschichtete erste Metallband, einen zweiten Abwickler (11) für das beschichtete zweite Metallband, einen dritten Abwickler (12) für die Kunststoffbahn, eine Zusammenführvorrichtung (14) in der die Metallbänder unter Zwischenschaltung der Kunststoffbahn zusammengeführt werden, und ggf. eine der Zusammenführvorrichtung nachgeordnete Heiz- und/oder Presseinrichtung (15) aufweist,
wobei die Vorbehandlungslinie (V) mit einer höheren Geschwindigkeit betreibbar ist als die Laminierlinie (L), nämlich mit zumindest der doppelten Geschwindigkeit.

6. Anlage nach Anspruch 5, **dadurch gekennzeichnet, dass** die Zusammenführvorrichtung (14) eine erste Laminiereinheit (31) aufweist, mit der die Kunststoffbahn (6) mit dem ersten Metallband (4) zusammenführbar ist und eine zweite Laminiereinheit (34) aufweist, mit der das zweite Metallband (5) mit der auf dem ersten Metallband (4) angeordneten Kunststoffbahn (6) zusammenführbar ist.

7. Anlage nach Anspruch 5 oder 6, **dadurch gekennzeichnet, dass** die Zusammenführvorrichtung eine Vorheizeinrichtung für das erste Metallband, eine Vorheizeinrichtung für das zweite Metallband, eine Vorheizeinrichtung für die Kunststoffbahn und/oder eine Nachheizeinrichtung für das erste Metallband und die darauf angeordnete Kunststoffbahn aufweist.

8. Anlage nach einem der Ansprüche 5 bis 7, **dadurch gekennzeichnet, dass** die Heiz- und/oder Pressvorrichtung zumindest eine Heizeinrichtung und eine der Heizeinrichtung nachgeordnete, separate Presseinrichtung aufweist.

9. Anlage nach einem der Ansprüche 5 bis 8, **dadurch gekennzeichnet, dass** die Beschichtungsvorrichtung als Walzenbeschichtungsvorrichtung mit zumindest einer Auftragswalze und ggf. einer Stützwalze ausgebildet ist.

10. Anlage nach einem der Ansprüche 5 bis 9, **dadurch gekennzeichnet, dass** die Vorbehandlungslinie (V) zumindest eine Reinigungsvorrichtung, z. B. eine Vorreinigungseinrichtung und eine Nachreinigungseinrichtung, aufweist.

11. Anlage nach einem der Ansprüche 5 bis 10, **dadurch gekennzeichnet, dass** die Vorbehandlungslinie (V) zumindest eine Richtvorrichtung, z. B. eine Streckbiegerichtvorrichtung aufweist.

12. Anlage nach einem der Ansprüche 5 bis 11, **dadurch gekennzeichnet, dass** in die Vorbehandlungslinie (V) eine Dressiereinrichtung zum Dressierwalzen integriert ist, z. B. (unmittelbar) vor einer Streckbiegerichteinrichtung.

## Claims

1. A method for producing composite webs or composite sheets consisting of at least a first cover layer (1) of metal, a second cover layer (2) of metal, and at least one core layer (3) of plastic, which is arranged between the cover layers (1, 2) and is integrally bonded thereto,
in which method a first metal strip (4) for the first cover layer (1), a second metal strip (5) for the second cover layer (2), and at least one plastic web (6) for the core layer (3) are brought together and integrally bonded to each other with the application of pressure and/or heat to form a composite web in a laminating line (2),
**characterised in that**
the first metal strip (4) and the second metal strip (5) are each unwound and continuously coated with an adhesion promoter in a pretreatment line (V),
the first metal strip (4) and the second metal strip (5) are wound up after the coating, and
the first metal strip (4), the second metal strip (5), and the plastic web (6) are then unwound and brought together and continuously bonded to each other with the application of pressure and heat to form the composite web in the laminating line (L), which is separate from the pretreatment line (V),
wherein the pretreatment line (V) is operated at a higher speed than the laminating line (L), specifically at least twice the speed.

2. The method according to Claim 1,
**characterised in that**
the metal strips (4, 5) are each cleaned, e.g. in a pre-cleaning device and a post-cleaning device, in the pretreatment line (V).

3. The method according to one of Claims 1 or 2,
**characterised in that**
the metal strips (4, 5) are each straightened, e.g. by way of stretcher-and-roller levelling and/or tension levelling, in the pretreatment line (V).

4. The method according to any one of Claims 1 to 3,
**characterised in that**
the metal strips are heated and dried in the pretreatment line (V) after coating with adhesion promoter.

5. An installation for producing composite webs or composite sheets consisting of at least a first cover layer (1) of metal, a second cover layer (2) of metal, and at least one core layer (3) of plastic, which is arranged between the cover layers (1, 2) and is integrally bonded thereto, using a method according to any one of Claims 1 to 4,
**characterised by** at least one pretreatment line (V) for coating the first metal strip (4) and the second metal strip (5), and at least one laminating line (L), which is separate from the pretreatment line (V), for bonding the metal strips with the plastic web interposed, wherein the pretreatment line (V) has at least an unwinding means (7), a coating apparatus (8) and a winding-up means (9), and
wherein the laminating line (L) has at least a first unwinding means (10) for the coated first metal strip, a second unwinding means (11) for the coated second metal strip, a third unwinding means (12) for the plastic web, a joining apparatus (14) in which the metal strips are brought together with the plastic web interposed, and, where applicable, a heating and/or pressing device (15) situated downstream of the joining apparatus,
wherein the pretreatment line (V) can be operated at a higher speed than the laminating line (L), specifically at least twice the speed.

6. The installation according to Claim 5,
**characterised in that**
the joining apparatus (14) has a first laminating unit (31) with which the plastic web (6) can be brought together with the first metal strip (4), and a second laminating unit (34) with which the second metal strip (5) can be brought together with the plastic web (6) situated on the first metal strip (4).

7. The installation according to Claim 5 or 6,
**characterised in that**
the joining apparatus has a preheating device for the first metal strip, a preheating device for the second metal strip, a preheating device for the plastic web, and/or a post-heating device for the first metal strip and the plastic web situated thereon.

8. The installation according to any one of Claims 5 to 7,
**characterised in that**
the heating and/or pressing apparatus has at least a heating device and a separate pressing device situated downstream of the heating device.

9. The installation according to any one of Claims 5 to 8,
**characterised in that**
the coating apparatus is in the form of a roller coating apparatus with at least one application roller and, where applicable, a supporting roller.

10. The installation according to any one of Claims 5 to 9,
**characterised in that**
the pretreatment line (V) has at least one cleaning apparatus, e.g. a pre-cleaning device and a post-cleaning device.

11. The installation according to any one of Claims 5 to 10,
**characterised in that**
the pretreatment line (V) has at least one straightening apparatus, e.g. a stretcher-and-roller levelling apparatus.

12. The installation according to any one of Claims 5 to 11,
**characterised in that**
a skin-pass rolling device for skin-pass rolling is integrated in the pretreatment line (V), e.g. (immediately) before a stretcher-and-roller levelling device.

## Revendications

1. Procédé, destiné à fabriquer des bandes ou tôles composites, constituées d'au moins une première couche de couverture (1) en métal, d'une deuxième couche de couverture (2) en métal et d'au moins une couche centrale (3) en matière plastique, placée entre les couches de couverture (1, 2) et reliée par matière avec celle-ci,
un premier feuillard métallique (4) pour la première couche de couverture (1), un deuxième feuillard métallique (5) pour la deuxième couche de couverture (2) et au moins une bande de matière plastique (6) pour la couche centrale (3) étant regroupés dans une ligne de laminage (2) et reliés par matière l'un à l'autre en une bande composite, en utilisant de la pression et/ou de la chaleur,
**caractérisé en ce que**
le premier feuillard métallique (4) et le deuxième feuillard métallique (5) sont respectivement déroulés dans une ligne de pré-usinage (V) et enduits en continu d'un agent adhésif,
suite à l'opération d'enduction, le premier feuillard métallique (4) et le deuxième feuillard métallique (5) sont enroulés, et
le premier feuillard métallique (4) et le deuxième feuillard métallique (5) et la bande de matière plastique (6) sont ensuite déroulés dans la ligne de laminage (L) séparée de la ligne de pré-usinage (V) et regroupés et reliés l'un à l'autre en continu pour obtenir la bande continue, en utilisant de la pression et de la chaleur,
la ligne de pré-usinage (V) fonctionnant à une vitesse supérieure à celle de la ligne de laminage (L), à savoir à au moins le double de sa vitesse.

2. Procédé selon la revendication 1,
**caractérisé en ce que**
les feuillards métalliques (4, 5) sont respectivement nettoyés dans la ligne de pré-usinage (V), par exemple dans un système de pré-nettoyage et dans un système de post-nettoyage.

3. Procédé selon l'une quelconque des revendications 1 ou 2,
**caractérisé en ce que**
les feuillards métalliques (4, 5) sont respectivement alignés dans la ligne de pré-usinage (V), par exemple par voie d'alignement par traction et flexion et/ou de d'étirage par traction.

4. Procédé selon l'une quelconque des revendications 1 à 3,
**caractérisé en ce**
**qu'**après l'opération d'enduction avec l'agent adhésif, les feuillards métalliques sont chauffés ou séchés dans la ligne de pré-usinage (V).

5. Installation, destinée à fabriquer des bandes ou tôles composites, lesquelles sont constituées d'au moins une première couche de couverture (1) en métal, d'une deuxième couche de couverture (2) en métal et d'au moins une couche centrale (3) en matière plastique, placée entre les couches de couverture (1, 2) et reliée par matière avec celle-ci, d'après un procédé selon l'une quelconque des revendications 1 à 4,
**caractérisée par** au moins une ligne de pré-usinage (V), destinée à revêtir le premier feuillard métallique (4) et le deuxième feuillard métallique (5) et par au moins une ligne de laminage (L) séparée de la ligne de pré-usinage (V), destinée à relier les feuillards métalliques en interposant la bande de matière plastique,
la ligne de pré-usinage (V) comportant au moins un dérouleur (7), un dispositif de d'enduction (8) et un enrouleur (9), et
la ligne de laminage (L) comportant au moins un premier dérouleur (10) pour le premier feuillard métallique revêtu, un deuxième dérouleur (11) pour le deuxième feuillard métallique revêtu, un troisième dérouleur (12) pour la bande de matière plastique, un dispositif de regroupement (14), dans lequel les feuillards métalliques sont regroupés, en intercalant la bande de matière plastique, et le cas échéant, un système de chauffage et/ou de pressage (15), placé en aval du dispositif de regroupement,
la ligne de pré-usinage (V) étant susceptible de fonctionner à une vitesse supérieure à celle de la ligne de laminage (L), à savoir à au moins le double de sa vitesse.

6. Installation selon la revendication 5,
**caractérisée en ce que**
le dispositif de regroupement (14) comporte une première unité de laminage (31), à l'aide de laquelle la bande de matière plastique (6) est susceptible d'être regroupée avec le premier feuillard métallique (4) et une deuxième unité de laminage (34), à l'aide de laquelle le deuxième feuillard métallique (5) est susceptible d'être regroupé avec la bande de matière plastique (6) placée sur le premier feuillard métallique (4).

7. Installation selon la revendication 5 ou 6,
**caractérisée en ce que**
le dispositif de regroupement comporte un système de préchauffage pour le premier feuillard métallique, un système de préchauffage pour le deuxième feuillard métallique, un système de préchauffage pour la bande de matière plastique et/ou un système de postchauffage pour le premier feuillard métallique et la bande de matière plastique placée sur celui-ci.

8. Installation selon l'une quelconque des revendications 5 à 7,
**caractérisée en ce que**
le dispositif de chauffage et/ou de pressage comporte au moins un système de chauffage et un système de pressage séparé, placé en aval du système de chauffage.

9. Installation selon l'une quelconque des revendications 5 à 8,
**caractérisée en ce que**
le dispositif d'enduction est conçu sous la forme d'un dispositif d'enduction au rouleau, pourvu d'au moins un rouleau d'application et le cas échéant, d'un rouleau de soutien.

10. Installation selon l'une quelconque des revendications 5 à 9,
**caractérisée en ce que**
la ligne de pré-usinage (V) comporte au moins un dispositif de nettoyage, par exemple un dispositif de pré-nettoyage et un dispositif de post-nettoyage.

11. Installation selon l'une quelconque des revendications 5 à 10,
**caractérisée en ce que**
la ligne de pré-usinage (V) comporte au moins un dispositif d'alignement, par exemple un dispositif d'alignement par traction et flexion.

12. Installation selon l'une quelconque des revendications 5 à 11,
**caractérisée en ce que**
dans la ligne de pré-usinage (V) est intégré un système de dressage, destiné à dresser au rouleau, par exemple (directement) à l'avant d'un système d'alignement par traction et flexion.
